(19) Europäisches Patentamt
European Patent Office
Office européen des brevets

(11) **EP 3 842 480 A1**

(12) **EUROPEAN PATENT APPLICATION**
published in accordance with Art. 153(4) EPC

(43) Date of publication:
**30.06.2021 Bulletin 2021/26**

(21) Application number: **19852833.3**

(22) Date of filing: **02.08.2019**

(51) Int Cl.:
***C08J 5/18*** *(2006.01)* ***B32B 27/30*** *(2006.01)*
***B32B 27/34*** *(2006.01)* ***C08F 299/06*** *(2006.01)*

(86) International application number:
**PCT/JP2019/030480**

(87) International publication number:
**WO 2020/039892 (27.02.2020 Gazette 2020/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **23.08.2018 JP 2018155933**

(71) Applicant: **Toray Industries, Inc.**
**Tokyo, 103-8666 (JP)**

(72) Inventors:
- **ISHIDA, Yasuyuki**
  **Otsu-shi, Shiga 520-8558 (JP)**
- **MIWA, Norifumi**
  **Otsu-shi, Shiga 520-8558 (JP)**
- **YAHIRO, Kensuke**
  **Otsu-shi, Shiga 520-8558 (JP)**

(74) Representative: **Kador & Partner PartG mbB**
**Corneliusstraße 15**
**80469 München (DE)**

(54) **RESIN FILM, LAMINATED BODY, AND PRODUCTION METHOD FOR LAMINATED BODY**

(57) This resin film is characterized by comprising a segment represented by chemical formula 1 and a segment represented by chemical formula 2, and by satisfying condition 1. Condition 1: In an FT-IR spectrum of the resin film, a minimum value ($T_1$) of transmittance at not lower than 3250 cm-1 but lower than 3350 cm-1 and a minimum value ($T_2$) of transmittance at not lower than 3350 cm-1 but lower than 3450 cm-1 satisfy formula 1:

$$\text{Formula 1: } T_2 < T_1$$ Formula 1:

The present invention provides: a resin film that has flexibility and high restoration properties and simultaneously exhibits heat resistance; and a laminated body having said resin film.

[Chemical Formula 1]

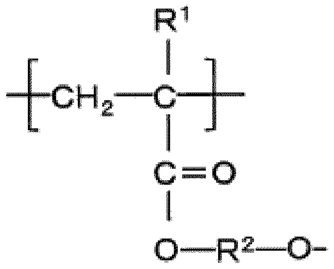

··· Chemical Formula 1

EP 3 842 480 A1

[Chemical Formula 2]

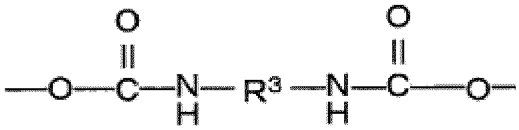

… Chemical Formula 2

Figure 1

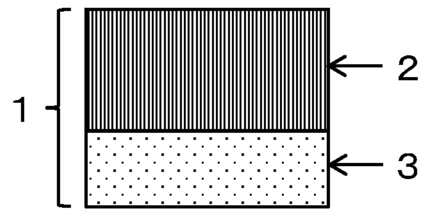

## Description

### TECHNICAL FIELD

The present invention relates to a resin film having both high flexibility and restoration properties, and a laminated body including the resin film.

### BACKGROUND ART

Thinner and lighter displays have created new devices such as smartphones and tablets. Users can freely carry the devices to desired places from office and home rooms and the like in which conventional display products are installed and used. The shape of the display can correspond to a universal shape from a flat and square shape, which makes it possible to incorporate the display into various products in daily lives without design restrictions. Furthermore, at present, a display that can be freely bent is being realized, and a display that can be stretched is also proposed. If these are put into practical use, devices and applications that have never been imagined are expected to appear.

Various sensors that can detect strains, minute pressure changes, and temperatures have been used for industrial and medical purposes and the like. However, compact and light weight sensors are attached to various objects in daily lives, including mobile devices, and useful for improving convenience in daily lives and avoiding danger. In the future, these sensors are lighter, and can be freely bent and stretched, whereby the sensors can be attached to bodies without load, which are expected to change our lives.

In the fields of such displays and sensors, various resin films have been used for light weight and compactness. However, materials used so far are films having rigid chemical bonds and strong crystallinity, and can be freely bent, but the materials cannot be expanded or contracted. Therefore, in the fields of displays and sensors, a resin film that can be freely bent and stretched is required in the above-mentioned needs.

Meanwhile, typical examples of a resin material that can be freely bent and stretched include a thermoplastic polyurethane elastomer described in Non-Patent Document 1. Furthermore, as a material having excellent elastic recovery and stretchability, "a polyurethane produced by reacting a polyether polyol (a) having a carbonate bond with an isocyanate compound (b), wherein the polyether polyol (a) has a hydroxyl value of 55 or less" is proposed as described in Patent Document 1.

As a cross-linkable flexible and restoring material, Patent Document 2 proposes "an active energy ray-curable resin composition containing at least (a-1) a polyisocyanate, (a-2) a low molecular weight polyol having an alicyclic structure and having a number average molecular weight of 500 or less, and (a-3) a urethane(meth)acrylate-based oligomer (A) which is a reaction product of hydroxyalkyl(meth)acrylate, wherein a calculated molecular weight between network crosslinking points in the composition is 1000 or more and 6000 or less.

### PRIOR ART DOCUMENTS

#### PATENT DOCUMENTS

Patent Document 1: Japanese Patent Laid-open Publication No. 2015-189886
Patent Document 2: Japanese Patent Laid-open Publication No. 2010-222568

#### NON-PATENT DOCUMENTS

Non-Patent Document 1: Mutsuhisa Furukawa: What Brings Mechanical Properties of Themoplastic Polyurethane Elastomers, Journal of The Society of Rubber Industry, Vol. 83, No. 9 (2010)

### SUMMARY OF THE INVENTION

#### PROBLEMS TO BE SOLVED BY THE INVENTION

The "free bending and stretching" required for the above-mentioned displays and sensors means that the displays and the sensors are required to be capable of being largely stretched with a weak force and almost completely restored at a temperature of 0°C or lower at earlier cycle more than once per second because of its application.

Meanwhile, conventionally, one of the reasons why the films having rigid chemical bonds and high crystallinity as described above have been used in resin films used for displays and sensors and the like is that the films require

their durability because a process of providing products involves heating.

Therefore, in order to use resin films that can be freely bent and stretched in displays and sensors and the like, heat resistance that withstands subsequent processes is also required in addition to high flexibility and quick restoration properties required for free bending and stretching.

In response to the above requests, the present inventors have confirmed the above-mentioned viewpoints, and have found that the material proposed in Patent Document 1 certainly has excellent flexibility, but a high level of restoration properties of the material required for the present application, and heat resistance of the material that withstands the processes are insufficient.

When the present inventors confirmed the above-mentioned viewpoints regarding the material proposed in Patent Document 2, the present inventors have found that the material has a certain degree of flexibility and heat resistance, but high restoration properties of the material required for the present application is insufficient.

From the above points, an object of the present invention is to provide a resin film that has flexibility and high restoration properties and simultaneously exhibits heat resistance that withstands a manufacturing process, and a laminated body including the resin film.

SOLUTIONS TO THE PROBLEMS

In order to solve the above problems, the present inventors have completed the following inventions as a result of repeated diligent research. That is, the present invention is as follows.

A resin film comprising a segment represented by chemical formula 1 and a segment represented by chemical formula 2, and satisfying condition 1:

condition 1: in an FT-IR spectrum of the resin film, a minimum value ($T_1$) of transmittance at not lower than 3250 $cm^{-1}$ but lower than 3350 $cm^{-1}$ and a minimum value ($T_2$) of transmittance at not lower than 3350 $cm^{-1}$ but lower than 3450 $cm^{-1}$ satisfy formula 1:

$$\text{Formula 1: } T_2 < T_1$$

[Chemical Formula 1]

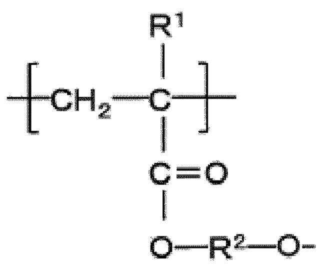

… Chemical Formula 1

[Chemical Formula 2]

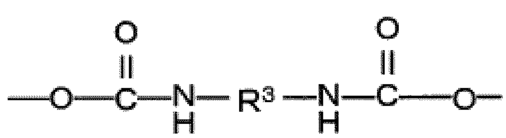

… Chemical Formula 2

$R^1$ refers to hydrogen or a methyl group;

$R^2$ refers to one of the following:

a substituted or unsubstituted alkylene group;
a substituted or unsubstituted arylene group;

an alkylene group having an ether group, an ester group, or an amide group therein;
an arylene group having an ether group, an ester group, or an amide group therein;
an unsubstituted alkylene group having an ether group, an ester group, or an amide group therein; and
an unsubstituted arylene group having an ether group, an ester group, or an amide group therein;
$R^3$ refers to any of the following:

a substituted or unsubstituted alkylene group; and
a substituted or unsubstituted arylene group.

EFFECTS OF THE INVENTION

It is possible to provide a resin film that has flexibility and high restoration properties and simultaneously exhibits heat resistance that withstands a manufacturing process, and a laminated body including the resin film.

BRIEF DESCRIPTION OF THE DRAWINGS

Fig. 1 is an example of a laminated body in the present invention.
Fig. 2 is an example of a laminated body in the present invention.
Fig. 3 is an example of a laminated body in the present invention.
Fig. 4 is an example of a laminated body in the present invention.
Fig. 5 is an example of a laminated body in the present invention.
Fig. 6 is an example of a laminated body in the present invention.
Fig. 7 is an example of a laminated body in the present invention.
Fig. 8 is an example of a laminated body in the present invention.

EMBODIMENTS OF THE INVENTION

The present inventors consider the reason why the problems of the present invention cannot be solved by a conventional technique as follows before describing embodiments for carrying out the present invention.

The reason why a polyurethane described in Patent Document 1 functions as an elastomer is that a polymer has a soft segment having flexibility and a hard segment having a high cohesive force, wherein the segments form a microphase separated structure. The present inventors consider that extensibility is exhibited by the deformation of the flexible soft segment, and restoration properties are exhibited by a physical cross-link due to the cohesive force between the hard segments.

In order to exhibit a high level of restoration properties and heat resistance that withstands a process as in the problems of the present invention, it is necessary to strengthen a cross-link. For the attainment, a hard segment having a stronger cohesive force is required. For that purpose, it is necessary to increase the volume of the hard segment, but on the other hand, an elastic modulus is high. As a result, the present inventors consider that a high level of flexibility, a high level of restoration properties, and heat resistance are basically in a trade-off relationship.

From a more macroscopic point of view, it is necessary to strengthen the phase separated structure when the restoration properties are improved as described above, but the phase separated structure forms a long-period structure. As a result, the present inventors consider as follows: the long-period structure is deformed during elongation-restoration, so that a restoration speed is low even if the restoration properties are good, which makes it impossible to provide a high level of restoration properties required in the problems of the present invention.

A cured product of urethane acrylate described in Patent Document 2 has a chemical cross-link due to the cross-link of acrylate in addition to a physical cross-link due to a cohesive force between hard segments, but it is essential to use a low molecular weight polyol having a number average molecular weight of 500 or less as the material. The present inventors consider as follows: since this presumably functions as a chain extender, the volume of the hard segment increases, to form the microphase separated structure, so that the long-period structure appears, which causes deteriorated restoration properties.

Meanwhile, the present inventors have devised to form a small and strong chemical cross-link at a low density in a film as a cross-linked structure necessary for exhibiting restoration properties and imparting heat resistance without relying on the physical cross-link due to the aggregation between hard segments as in the conventional technique as a method for solving the above-mentioned problems, thereby achieving both a high level of flexibility and heat resistance. The present inventors have considered that it is important not to form the long-period structure that adversely affects the exhibition of a high level of restoration properties, and have aimed to avoid the formation of the microphase separated

structure as in the conventional technique. The specific achievement method will be described.

It is important that a resin film of the present invention contains a segment represented by chemical formula 1 and a segment represented by chemical formula 2, and satisfies condition 1 (in an FT-IR spectrum of the resin film, a minimum value ($T_1$) of transmittance at not lower than 3250 $cm^{-1}$ but lower than 3350 $cm^{-1}$ and a minimum value ($T_2$) of transmittance at not lower than 3350 $cm^{-1}$ but lower than 3450 $cm^{-1}$ satisfy formula 1).

$$\text{Formula 1: } T_2 < T_1$$

The fact that the resin film contains the segment represented by chemical formula 1 or chemical formula 2 can be investigated by various analytical methods, but a pyrolysis GC-MS method is convenient. The fact can also be determined from raw materials that form the resin film.

The segment represented by chemical formula 1 means a segment obtained by radically polymerizing a (meth)acryloyl group, that is, means that the resin film has a cross-link provided by the polymerization of a (meth)acryloyl group, that is, a chemical cross-link. $R^1$ in chemical formula 1 refers to hydrogen or a methyl group. $R^2$ in chemical formula 1 refers to one of the following:

- a substituted or unsubstituted alkylene group;
- a substituted or unsubstituted arylene group;
- an alkylene group having an ether group, an ester group, or an amide group therein;
- an arylene group having an ether group, an ester group, or an amide group therein;
- an unsubstituted alkylene group having an ether group, an ester group, or an amide group therein;
- an unsubstituted arylene group having an ether group, an ester group, or an amide group therein;

The segment represented by chemical formula 2 refers to a segment with a urethane bond. $R^3$ represented by chemical Formula 2 refers to any of the following:

- a substituted or unsubstituted alkylene group;
- a substituted or unsubstituted allylene group.

In the FT-IR spectrum of a resin containing a urethane bond, absorption at not lower than 3250 $cm^{-1}$ but lower than 3450 $cm^{-1}$ corresponds to the stretching vibration of an NH group. Here, when the NH group is hydrogen-bonded to a carbonyl group of another urethane bond, an absorption peak appears at not lower than 3250 $cm^{-1}$ but lower than 3350 $cm^{-1}$. When the NH group is not hydrogen-bonded to the carbonyl group of another urethane bond, an absorption peak appears at not lower than 3350 $cm^{-1}$ but lower than 3450 $cm^{-1}$.

That is, when the NH group is hydrogen-bonded to the carbonyl group of another urethane bond, a minimum value ($T_1$) of transmittance at not lower than 3250 $cm^{-1}$ but lower than 3350 $cm^{-1}$ and a minimum value ($T_2$) of transmittance at not lower than 3350 $cm^{-1}$ but lower than 3450 $cm^{-1}$ satisfy the relationship of $T_2 > T_1$. Meanwhile, when the NH group is not hydrogen-bonded to the carbonyl group of another urethane bond, the minimum value ($T_1$) of transmittance at not lower than 3250 $cm^{-1}$ but lower than 3350 $cm^{-1}$ and the minimum value ($T_2$) of transmittance at not lower than 3350 $cm^{-1}$ but lower than 3450 $cm^{-1}$ satisfy the relationship of $T_1 > T_2$ (the relationship that satisfies the condition 1).

Polyurethane and urethane acrylate of the conventional technique have a strong hydrogen bond between the NH group of the urethane segment and the carbonyl group and have a physical cross-link due to a cohesive force between the urethane bonds, so that $T_2 > T_1$ is set. Meanwhile, unlike the conventional technique, the resin film of the present invention has urethane bonds but a weak cohesive force between the urethane bonds. Therefore, the relationship of $T_2 < T_1$ (the relationship that satisfies the condition 1) is set.

Furthermore, the resin film of the present invention preferably satisfies condition 2 in small-angle X-ray scattering by vertically incident X-rays. Here, the condition 2 means that a slope A when a logarithm of scattering intensity (I(q)) is plotted on a Y-axis and a logarithm of a wave number vector (q) is plotted on an X-axis satisfies the formula 2 when q is 0.01 $nm^{-1}$ or more and 0.02 $nm^{-1}$ or less. A method for measuring the small-angle X-ray scattering will be described later.

$$\text{Formula 2: } -5.0 \leq A \leq -3.0$$

Here, the scattering intensity (I(q)) is a parameter related to the structure of a measurement sample. When an aggregated structure is present in the structure of a resin, the scattering intensity (I(q)) depends on the shape thereof. When a scatterer is isotropic and does not have a significantly long-period structure, the scattering intensity (I(q)) is

attenuated as the -4th power of q. When a thin circular disk and an elongated rod are randomly oriented, the thin circular disk and the elongated rod are respectively attenuated as the 2th- and first power of q. That is, the power multiplier of the wave number vector in this asymptotic behavior (A in $q^A$) represents the structure of the scatterer.

In the present invention, the logarithm of the scattering intensity (I(q)) of the resin film is plotted against the logarithm of the wave number vector (q). A range in which the wave number vector (q) is linearly approximated by the least squares method in a range of 0.01 $nm^{-1}$ or more and 0.02 $nm^{-1}$ or less, and the slope of the straight line is taken as A. In the present invention, it is preferable that the value of A thus obtained is within a range satisfying formula 2 ($-5.0 \leq A \leq -3.0$). By satisfying the formula 2, a microphase separated structure is less likely to be formed in the resin film, to provide improved restoration properties.

Furthermore, it is preferable that the interaction between the segments in the resin film is set to be within a specific range in order to satisfy the condition 2, specifically, the resin film of the present invention preferably contains a segment represented by chemical formula 3 in addition to the above-mentioned segment represented by chemical formula 1 and the above-mentioned segment represented by chemical formula 2, and satisfies condition 3.

[Chemical Formula 3]

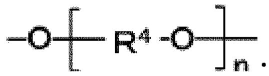 ··· Chemical Formula 3

$R^4$ refers to any of the following, and n is an integer of 3 or more:

- a substituted or unsubstituted alkylene group;
- a substituted or unsubstituted arylene group;
- an alkylene group having an ether group or an ester group therein;
- an allylene group having an ether group or an ester group therein;
- an unsubstituted alkylene group having an ether group or an ester group therein; and
- an unsubstituted arylene group having an ether group or an ester group therein.

Here, the condition 3 means that the vector length of the Hansen solubility parameter of the segment represented by chemical formula 2 (hereinafter taken as $D_2$) and the vector length of the Hansen solubility parameter of the segment represented by chemical formula 3 (hereinafter taken as $D_3$) satisfy formula 3.

$$\text{Formula 3: } |D_2 - D_3| \leq 2 \ ((MPa)^{0.5})$$

Here, chemical formula 3 is a segment with a polyol residue. Furthermore, n is an integer of 3 or more as described above, and more preferably an integer of 7 or more.

The inclusion of a segment in which n in chemical formula 3 is less than 3 causes deteriorated flexibility depending on the structure. In particular, the inclusion of a compound in which n is 1 to 2 may cause deteriorated restoration properties. The upper limit of n in chemical formula 3 depends on the structure of chemical formula 3, and from the viewpoint of heat resistance and restoration properties, n is preferably selected so that the average molecular weight of the segment represented by chemical formula 3 is 2500 or less.

Here, the solubility parameter (SP value) is a physical property value defined by the square root of a cohesive energy density proposed by Hildebrand, and is a numerical value indicating the dissolution behavior of the solvent. The Hansen's solubility parameter (HSP value) is obtained by dividing the SP value into three components of a dispersion force term ($\delta_D$), a polarity force term ($\delta_P$), and a hydrogen bond force term ($\delta_H$), and considering the polarity of a substance. The HSP value is one of parameters which not only evaluate the solubility of a substance, but also attract attention in a wide range of fields such as solvent resistance and water resistance evaluation of polymer materials, solubility evaluation of medicinal products, and aggregation and decomposition evaluation of fine particles in solvents. The HSP value can be obtained from the presence or absence of dissolution and the presence or absence of swelling using known solvents.

The HSP value can be estimated from the structural formula in addition to the above-mentioned method. As described above, the following method can be used in order to obtain the Hansen solubility parameter of the segment represented by chemical formula 2 or chemical formula 3 under the condition 3. That is, the structure of each segment is input in smiles notation using "polymer" in DIY mode of Hansen Solubility Parameter in Practice (HSPiP) ver.4.0.03 (https://www.hansen-solubility.com). Then, the Hansen solubility parameter of the segments represented by chemical

formula 2 and chemical formula 3 used in the condition 3 can be obtained by the calculation.

Here, the vector lengths $D_2$ and $D_3$ of the Hansen solubility parameter of the segments represented by chemical formula 2 and chemical formula 3 are obtained by the following formula.

$$D_2 = (\delta_{D2}^2 + \delta_{P2}^2 + \delta_{H2}^2)^{1/2}$$

$\delta_{D2}$: Dispersion force term of segment represented by chemical formula 2
$\delta_{P2}$: Polarity force term of segment represented by chemical formula 2
$\delta_{H2}$: Hydrogen bond force term of segment represented by chemical formula 2

$$D_3 = (\delta_{D3}^2 + \delta_{P3}^2 + \delta_{H3}^2)^{1/2}$$

$\delta_{D3}$: Dispersion force term of segment represented by chemical formula 3
$\delta_{P3}$: Polarity force term of segment represented by chemical formula 3
$\delta_{H3}$: Hydrogen bond force term of segment represented by chemical formula 3

When the resin film of the present invention satisfies the condition 3, the interaction between the segments in the resin film can be set to be within a specific range. As the difference in solubility parameter is larger, the compatibility is poorer, and as the difference is smaller, the compatibility is better. As described above, under the condition 3, $| D_2 - D_3 |$ is preferably $2(MPa)^{0.5}$ or less (that is, satisfies formula 3), but $| D_2 - D_3 |$ is more preferably $1.5(MPa)^{0.5}$ or less.

Furthermore, the resin film of the present invention preferably uses a combination of specific segments in order to satisfy the conditions 1, 2, and 3. Specifically, the resin film contains a segment represented by chemical formula 4, and preferably contains any of a segment represented by chemical formula 5 or a segment represented by chemical formula 6.

[Chemical Formula 4]

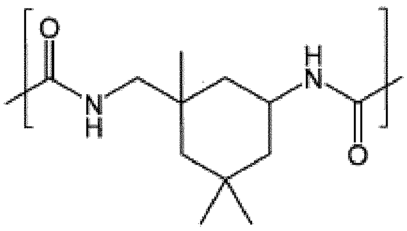

··· Chemical Formula 4

[Chemical Formula 5]

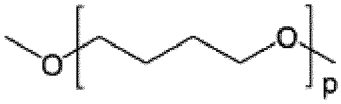

··· Chemical Formula 5

[Chemical Formula 6]

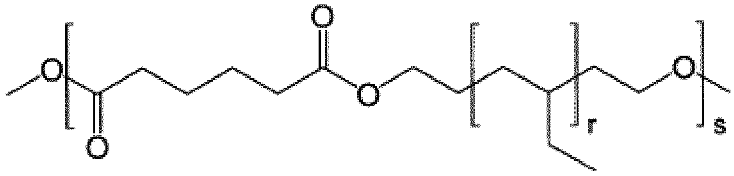

... Chemical Formula 6

p is an integer of 1 or more;
r is an integer of 1 or more; and
s is an integer of 1 or more.

Here, the segment represented by chemical formula 4 is preferable as the urethane bond that is the segment represented by chemical formula 2 described above. The segment represented by chemical formula 5 and the segment represented by chemical formula 6 are preferable as a polyol residue that is the segment represented by chemical formula 3 described above. By combining the segment represented by chemical formula 4 and the segment represented by chemical formula 5, or combining the segment represented by chemical formula 4 and the segment represented by chemical formula 6, the interaction between the segments can be set in a preferable range, and the microphase separated structure can be less likely to be formed, which is preferable.

The resin film of the present invention is preferably a cured product obtained by cross-linking a resin precursor containing a segment represented by chemical formula 7, and more preferably a cured product obtained by cross-linking a resin precursor containing a segment represented by chemical formula 8.

[Chemical Formula 7]

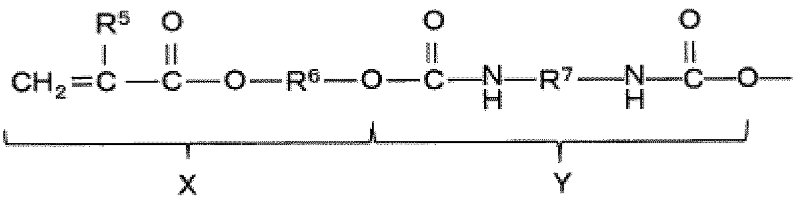

... Chemical Formula 7

Here, $R^5$ in the segment represented by chemical formula 7 refers to hydrogen or a methyl group, and $R^6$ refers to any of the following:

- a substituted or unsubstituted alkylene group;
- a substituted or unsubstituted arylene group;
- an alkylene group having an ether group, an ester group, or an amide group therein;
- an arylene group having an ether group, an ester group, or an amide group therein;
- an unsubstituted alkylene group having an ether group, an ester group, or an amide group therein;
- an unsubstituted arylene group having an ether group, an ester group, or an amide group therein.

Furthermore, $R^7$ in the segment represented by chemical formula 7 refers to any of the following:

- a substituted or unsubstituted alkylene group;
- a substituted or unsubstituted allylene group.

[Chemical Formula 8]

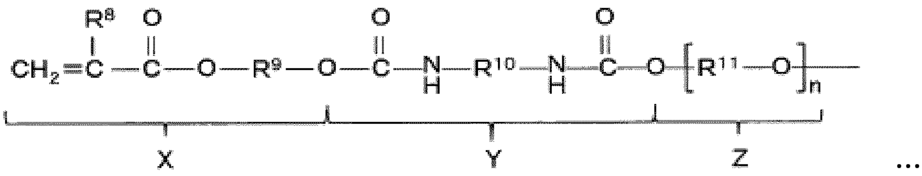

Chemical Formula 8

Here, $R^8$ in the segment represented by chemical formula 8 refers to hydrogen or a methyl group; $R^9$ and $R^{11}$ refer to any of the following; and n is an integer of 3 or more:

- a substituted or unsubstituted alkylene group;
- a substituted or unsubstituted arylene group;
- an alkylene group having an ether group, an ester group, or an amide group therein;
- an arylene group having an ether group, an ester group, or an amide group therein;
- an unsubstituted alkylene group having an ether group, an ester group, or an amide group therein;
- an unsubstituted arylene group having an ether group, an ester group, or an amide group therein.

Furthermore, $R^{10}$ in the segment represented by chemical formula 8 refers to one of the following:

- a substituted or unsubstituted alkylene group; and
- a substituted or unsubstituted allylene group.

Here, the resin precursor refers to a compound having a site that can be cross-linked. The segment represented by chemical formula 7 indicates that a (meth)acrylic group represented by X is at an end and a urethane bond represented by Y is adjacent thereto, and the (meth)acrylic group corresponds to a site to be cross-linked. Chemical formula 8 further indicates that the other end of the urethane bond represented by Y is a polyol residue for imparting flexibility, as indicated by Z.

On one surface of the resin film of the present invention, a laminated body including a support substrate may be formed. In particular, the laminated body of the present invention is a laminated body including a support substrate on at least one surface of the resin film of the present invention, and the peeling force between the support substrate and the resin film is 1 N/50 mm or less. Hereinafter, the support substrate in which the peeling force between the support substrate and the resin film is 1 N/50 mm or less is described as a peelable support substrate.

The structure of the laminated body of the present invention will be described with reference to the drawings. As shown in Fig. 1, a laminated body 1 of the present invention is a laminated body including a peelable support substrate 3 (a support substrate having a peeling force of 1 N/50 mm or less from the resin film) on at least one surface of a resin film 2.

Here, the support substrate is an in-plane flat article having a surface onto which a coating composition for forming a resin film can be applied by a method for producing a laminated body to be described later, when a resin film is provided on one surface of the laminated body of the present invention to be formed.

The reason why the support substrate is provided in the laminated body of the present invention is that, in a method for producing a laminated body to be described later, a liquid coating composition is applied onto a support substrate, and cross-linked to form a resin film, and that workability and transportability in subsequent processes in which the resin film is processed are secured. Therefore, a laminated body 4 preferably includes a support substrate 7 including a release layer 6 between the support substrate 7 and a resin film 5, as shown in Fig. 2 without particular limitation as long as it can be peeled off from the resin film (the peeling force from the resin film is 1 N/50 mm or less) and does not affect functions including the post-processability of the resin film.

When the laminated body is wound into a roll to form an intermediate product, a laminated body 8 may include a support substrate 11 including a release layer 10 provided on the opposite side of a resin film 9 as shown in Fig. 3 in order to stabilize the rolled shape of the roll. Of course, as shown in Fig. 4, a laminated body 12 may include a support substrate 16 including a release layer 14 between the support substrate 16 and a resin film 13, and a release layer 15 provided on the opposite side. In this case, the release layer 14 and the release layer 15 may be the same, but the

release layer 14 and the release layer 15 are preferably different from each other since it is necessary to adjust the peeling force between the resin film 13 and the release layer 15 when the laminated body is unwound from the roll and the peeling force between the resin film 13 and the release layer 14 in subsequent processes.

In order to improve the transportability of the resin film and prevent scratches in the processes, as shown in Fig. 5, a laminated body 17 may include a peelable support substrate 19 provided on one surface of a resin film 18 and a peelable protective material 20 provided on the other surface. The protective material and the support substrate may be the same, but as shown in Fig. 6, a laminated body 21 may include a support substrate 24 including a release layer 23 between the support substrate 24 and a resin film 22, and a protective material 25. As shown in Fig. 7, a laminated body 26 may include a support substrate 29 including a release layer 28 between the support substrate 29 and a resin film 27, and a protective material 31 including a release layer 30. As shown in Fig. 8, a laminated body 32 may include a support substrate 35 including a release layer 34 between the support substrate 35 and a resin film 33, and a protective material 37 including an adhesive layer 36. Whether the laminated body includes the protective material including the adhesive layer, or the protective material using the release layer is appropriately selected from the suitability of the subsequent processes and the physical properties of the resin film.

As described above, in the laminated body of the present invention, the peeling force between the support substrate and the resin film is 1 N/50 mm or less, and preferably 800 mN/50 mm or less. The lower limit of the peeling force between the support substrate and the resin film is not particularly limited, but if it is less than 10 mN/50 mm, the support substrate and the resin film may be peeled off or floated from each other in the producing process, so that the peeling force between the support substrate and the resin film is preferably 10 mN/50 mm or more.

Furthermore, the method for producing the laminated body of the present invention is not particularly limited, but it is preferable that steps 1, 2 and 3 are performed in this order and condition 4 is satisfied.

The step 1 is a step of applying a coating composition containing a resin precursor containing a segment represented by chemical formula 7 onto a support substrate to form a coating layer. The step 2 is a step of removing a solvent from the coating layer. The step 3 is a step of irradiating the coating layer with active energy rays to cross-link the resin precursor. As the coating composition used in the step 1, it is more preferable to use a coating composition containing a resin precursor containing a segment represented by chemical formula 8.

Condition 4: After the step 2 and before the step 3, the coating layer from which the solvent has been removed satisfies formula 4.

$$\text{Formula 4: } T_4 > T_3$$

$T_3$: a minimum value of transmittance at not lower than 3250 $cm^{-1}$ but lower than 3350 $cm^{-1}$ in the FT-IR spectrum of the coating layer from which the solvent has been removed.

$T_4$: a minimum value of transmittance at not lower than 3350 $cm^{-1}$ but lower than 3450 $cm^{-1}$ in the FT-IR spectrum of the coating layer from which the solvent has been removed.

The condition 4 indicates the change of NH groups before and after the step 3. The FT-IR spectrum of the coating layer after the step 2 and before the step 3 indicates the above-mentioned relationship of $T_4 > T_3$ as shown by formula 4, that is, that the NH group of the urethane bond has a strong hydrogen bond with the carbonyl group of another urethane bond. The FT-IR spectrum of the resin film after the step 3 satisfies condition 1 (the above-mentioned relationship of $T_1 > T_2$ as shown by formula 1), that is, indicates that the NH group of the urethane bond has a weak hydrogen bond with the carbonyl group of another urethane bond.

Satisfying the formula 4 in the condition 4 means that the resin precursor containing the segment represented by chemical formula 7 or chemical formula 8 is gathered by hydrogen bonds between the urethane bonds in the process of removing the solvent in the step 2, and (meth)acrylic groups adjacent to the urethane bonds are collected, whereby a strong cross-linking reaction can be promoted even if the number of cross-linked sites of the resin precursor is small.

Satisfying the formula 4 in the condition 4 means that the subsequent cross-linking by irradiation with active energy rays causes a cross-linking reaction between (meth)acrylic groups, which causes a changed distance between urethane bonds to cause a reduced cohesive force between the urethane bonds. This is considered to make it possible to exhibit high restoration properties.

[Embodiments of The Present Invention]

Hereinafter, embodiments of the present invention will be specifically described.

[Resin Film]

The resin film of the present invention is not particularly limited in the number of layers as long as it has a film-like structure by itself, and may be formed of one layer or two or more layers. Here, the layer refers to a portion including a boundary surface distinguishable from an adjacent portion toward a thickness direction and having a finite thickness. More specifically, the layer refers to one that is distinguished by the presence or absence of a discontinuous boundary surface when the cross section of the resin film is observed with an electron microscope (transmission type, scanning type) or an optical microscope. Even if the composition changes in the thickness direction of the resin film, the resin film is treated as one layer when the above-mentioned boundary surface is not present.

The resin film of the present invention may have other properties such as glossiness, fingerprint resistance, moldability, designability, scratch resistance, stain resistance, solvent resistance, antireflection properties, antistatic properties, conductivity, heat reflectivity, near-infrared absorbency, electromagnetic-shielding properties, and adhesion-improving properties in addition to flexibility, restoration properties, and heat resistance as the objects of the present invention. In that case, one or more layers may be further formed. For example, a functional layer having the above-mentioned functions, an adhesive layer, an electronic circuit layer, a printing layer, an optical adjustment layer, and another functional layer may be provided.

The thickness of the resin film is not particularly limited, and is appropriately selected depending on the application. The lower limit of the thickness of the resin film is not completely determined because it is affected by the elastic modulus and elongation at break of the resin film itself, and the peeling force and peeling angle of the resin film from the laminated body, and the like, but the lower limit is about several $\mu$m when physical properties equivalent to those of general flexible materials are realized using a method for producing a laminated body to be described later.

[Laminated Body]

The laminated body of the present invention means a laminated body including a support substrate provided on at least one surface of a resin film exhibiting the above-mentioned physical properties, wherein the peeling force between the support substrate and the resin film is 1 N/50 mm or less. As long as the laminated body has this aspect, the laminated body may be in a flat state, or may have a three-dimensional shape after being molded.

[Support Substrate]

The support substrate used in the laminated body of the present invention may be made of either a thermoplastic resin or a thermosetting resin, may be made of a homoresin, may be copolymerized, or may be a blend of two or more resins. The resin constituting the support substrate is preferable as long as it has good moldability, and from that point, a thermoplastic resin is more preferable.

Examples of the thermoplastic resin suitably used for the support substrate include polyolefin resins such as polyethylene, polypropylene, polystyrene, and polymethylpentene, alicyclic polyolefin resins, polyamide resins such as nylon 6 and nylon 66, aramid resins, polyimide resins, polyester resins, polycarbonate resins, polyallylate resins, polyacetal resins, polyphenylene sulfide resins, fluororesins such as tetrafluoroethylene resin, trifluoroethylene resin, trifluorochloroethylene resin, tetrafluoroethylene-hexafluoropropylene copolymer, and vinylidene fluoride resin; acrylic resins; methacrylic resins; polyacetal resins; polyglycolic acid resins; and polylactic acid resins.

Examples of the thermosetting resin suitably used for the support substrate include phenol resins, epoxy resins, urea resins, melamine resins, unsaturated polyester resins, polyurethane resins, polyimide resins, and silicone resins. The thermoplastic resin is preferably a resin having sufficient stretchability and conformability. From the viewpoint of strength, heat resistance, and transparency, the thermoplastic resin is more preferably a polyester resin, a polycarbonate resin, an acrylic resin, or a methacrylic resin.

The polyester resin suitably used for the support substrate, which is a general term of polymers having an ester bond as a main bond chain of the main chain, is obtained by polycondensation of an acid component and its ester and a diol component. Specific examples include polyethylene terephthalate, polypropylene terephthalate, polyethylene-2,6-naphthalate, and polybutylene terephthalate. Any other dicarboxylic acid and its ester and diol component may be copolymerized as an acid component and a diol component. Of these, polyethylene terephthalate and polyethylene-2,6-naphthalate are particularly preferable in terms of transparency, dimensional stability, and heat resistance and the like.

To the support substrate, various additives, for example, antioxidants, antistatic agents, crystal nucleating agents, inorganic particles, organic particles, viscosity reducing agents, heat stabilizers, lubricants, infrared absorbers, ultraviolet absorbers, and doping agents for refractive index adjustment and the like may be added.

Furthermore, the support substrate may have either a single-layer structure or a laminated structure.

On the surface of the support substrate, functional layers such as an easy-adhesive layer, an antistatic layer, an undercoat layer, an ultraviolet absorbing layer, and a release layer may be provided in advance separately from the

resin film of the present invention. The laminated body of the present invention preferably includes a release layer in order to reduce the peeling force between the support substrate and the resin film. The release layer will be described in detail later.

Examples of the support substrate including the release layer include "Cerapeel" (registered trademark) manufactured by TORAY ADVANCED FILM Co., Ltd., "Unipeel" (registered trademark) manufactured by Unitika Ltd., "PANA-PEEL" (Registered trademark) manufactured by Panac Co., Ltd., "TOYOBO ESTER" (registered trademark) manufactured by Toyobo Co., Ltd., and "Purex" (registered trademark) manufactured by Teijin Co., Ltd. These products can also be used.

The surface of the support substrate may be subjected to various surface treatments before forming the resin film. Examples of the surface treatment include a chemical treatment, a mechanical treatment, a corona discharge treatment, a flame treatment, an ultraviolet irradiation treatment, a high-frequency treatment, a glow discharge treatment, an active plasma treatment, a laser treatment, a mixed acid treatment, and an ozone oxidation treatment. Among these, a glow discharge treatment, an ultraviolet irradiation treatment, a corona discharge treatment, and a flame treatment are preferable, and a glow discharge treatment and an ultraviolet irradiation treatment are more preferable.

[Release Layer]

The support substrate used for the laminated body of the present invention preferably includes a release layer as described above. The support substrate including the release layer is also referred to as a release film. The release layer may be composed of a plurality of layers from the viewpoint of imparting adhesion, antistatic property, and solvent resistance and the like, or may be provided on each of both the surfaces of the support substrate.

The composition and thickness of the release layer are not particularly limited as long as the peeling force from the resin film can be set to be within the above-mentioned preferable range, but the thickness is preferably 10 to 500 nm, and more preferably 20 to 300 nm in terms of the in-plane uniformity, quality, and peeling force of the release layer.

[Protective Material]

The laminated body of the present invention may include a protective material provided on the surface opposite to the support substrate of the resin film as shown in Fig. 5 as described above. The protective material is distinguished from the support substrate as follows. In the method for producing the laminated body, the support substrate is coated with a coating composition, and the protective material is bonded after the resin film is formed. The protective material may be the same as or different from the above-mentioned support substrate, but it is preferable that the protective material has a difference in peeling force from the above-mentioned support substrate for use in subsequent processes. The magnitude relationship of the peeling force between the protective material and the resin film of the support substrate is appropriately selected depending on methods for use in subsequent processes. Therefore, the protective material may include a release layer as shown in Fig. 7 as described above, may include an adhesive layer as shown in Fig. 8, and may not include a layer as shown in Fig. 6.

[Method for Producing Laminated Body]

A method for producing a laminated body of the present invention is not particularly limited, but it is preferably a method in which steps 1, 2, and 3 are performed in this order and condition 4 is satisfied, as described above. That is, a coating composition containing a resin precursor containing a segment represented by chemical formula 7 is applied onto a support substrate to form a coating layer (step 1); a solvent is then removed from the coating layer, and dried (step 2); and the resin precursor is cross-linked by irradiating the resin precursor with active energy rays (step 3), to form a resin film, thereby producing a laminated body.

The method for applying the coating composition onto the support substrate in the step 1 is not particularly limited as long as the coating composition can be applied onto the support substrate to form an in-plane uniform coating layer. The method for applying the coating composition onto the film can be appropriately selected from a dip coating method, a roller coating method, a wire bar coating method, a gravure coating method, and a die coating method (U.S. Patent No. 2681294) and the like. Here, the coating layer refers to a "liquid layer" formed in a coating step.

The method for removing the solvent in the step 2, that is, the drying method is not particularly limited as long as the solvent can be removed from the coating layer formed on the support substrate. Examples of the drying method include heat transfer drying (close contact with a high-temperature substance), convective heat transfer (hot air), radiation heat transfer (infrared ray), and others (microwaves, induction heating). Among these, in the producing method of the present invention, a method using convective heat transfer or radiation heat transfer is preferable because a drying rate in a width direction needs to be precisely uniform.

In the cross-linking method of the step 3, after drying, the coating film from which the solvent has been removed

is irradiated with active energy rays to provide the cross-linking reaction of the coating film.

Cross-linking with active energy rays is preferably electron beam (EB) and/or ultraviolet rays (UV rays) in terms of versatility. Examples of the type of ultraviolet lamps used to apply ultraviolet rays include a discharge lamp type, a flash type, a laser type, and an electrodeless lamp type. When ultraviolet curing is performed using a high-pressure mercury lamp which is the discharge lamp type, ultraviolet irradiation is preferably performed under conditions such that the illuminance of ultraviolet rays is preferably 100 to 3,000 ($mW/cm^2$), more preferably 200 to 2,000 ($mW/cm^2$), and still more preferably 300 to 1,500 ($mW/cm^2$). The ultraviolet irradiation is preferably performed under conditions such that the total light quantity of ultraviolet rays is preferably 100 to 3,000 ($mJ/cm^2$), more preferably 200 to 2,000 ($mJ/cm^2$), and still more preferably 300 to 1,500 ($mJ/cm^2$). Here, the illuminance of ultraviolet rays is the intensity of radiation per unit area and changes with lamp output, emission spectrum efficiency, the diameter of a luminescent bulb, the design of a reflecting mirror, and the distance between a light source and an object to be irradiated. However, the illuminance does not change with a transport speed. The total light quantity of ultraviolet rays is the irradiation energy per unit area, and is the total amount of photon reaching the surface. The total light quantity is inversely proportional to the irradiation speed of an object running under the light source, and proportional to irradiation frequency and the number of lamps.

[Resin Precursor]

The resin precursor is not particularly limited as long as it is a compound having a site that can be cross-linked, but a resin precursor containing a segment represented by chemical formula 7 is preferable, and a resin precursor containing a segment represented by chemical formula 8 is more preferable. As described above, the segment represented by chemical formula 7 has a (meth)acrylic group represented by X in the figure at its end, and the (meth)acrylic group (X) at the end corresponds to a site that can be cross-linked. Furthermore, the (meth)acrylic group (X) is adjacent to a urethane bond represented by Y in the figure. Furthermore, the segment represented by chemical formula 8 means that the other end of a polyisocyanate residue urethane bond represented by Y is adjacent to a polyol residue (Z) represented by Z in chemical formula 8.

A urethane bond part (Y) of chemical formula 7 is preferably a residue of polyisocyanate such as TDI, MDI, NDI, TODI, XDI, PPDI, TMXDI, HMDI, IPDI, $H_6XDI$, or $H_{12}MDI$, and more preferably a structure of chemical formula 4.

The polyol residue of chemical formula 7 is preferably a polyester polyol, a polyether polyol, or a polycarbonate polyol, and more preferably contains the segment represented by chemical formula 4 and the segment represented by chemical formula 5, or the segment represented by chemical formula 4 and the segment represented by chemical formula 6.

[Coating Composition]

The term "coating composition" used in the method for producing a laminated body of the present invention is not particularly limited as long as it can be uniformly applied in a plane onto a support substrate, and a resin film exhibiting the properties of the present invention can be formed. It is preferable that the coating composition is suitable for the above-mentioned method for producing a laminated body. Specifically, it is preferable to add the above-mentioned resin precursor, and a solvent and other components to be described later to prepare a coating composition.

[Solvent]

The coating composition used for the method for producing a laminated body of the present invention may contain a solvent. The coating composition preferably contains a solvent in order to uniformly form the coating layer in a plane. The number of types of the solvent is preferably 1 or more and 20 or less, more preferably 1 or more and 10 or less, still more preferably 1 or more and 6 or less, and particularly preferably 1 or more and 4 or less. Here, the term "solvent" refers to a substance that can evaporate substantially the whole quantity in the above-mentioned drying step and is liquid at normal temperature and normal pressure.

Here, the type of the solvent is determined by a molecular structure constituting the solvent. That is, those having the same element composition and having the same type and number of functional groups but different bonding relationships (structural isomers), and those which are not the structural isomers, but do not exactly overlap even if they take any conformation in a three-dimensional space (stereoisomers) are treated as different types of solvents. For example, 2-propanol and n-propanol are treated as different solvents. Furthermore, it is preferable that, when a solvent is contained, the solvent exhibits the following properties.

[Other Components in Coating Composition]

The coating composition used for the method for producing a laminated body of the present invention preferably

contains an antioxidant, a polymerization initiator, a curing agent, and a catalyst. The polymerization initiator and the catalyst are used to promote the cross-linking of the resin film. Preferable polymerization initiators are those capable of initiating or promoting polymerization such as anionic polymerization, cationic polymerization, or radical polymerization reaction, condensation, or cross-linking reaction of components in the coating composition.

The antioxidant is roughly classified into a radical chain initiation inhibitor, a radical scavenger, and a peroxide decomposing agent depending on its mechanism of action, and any of these can provide the effects of the present invention for suppressing deterioration under high temperature conditions, which are the objects of the present invention. A radical scavenger or a peroxide decomposing agent are more preferable, and hindered phenol-based or semi-hindered phenol-based radical scavengers, or phosphite-based or thioether-based peroxide decomposing agents are particularly preferable.

Various polymerization initiators, curing agents, and catalysts may be used. The polymerization initiator, the curing agent, and the catalyst each may be used alone, or a plurality of polymerization initiators, a plurality of curing agents, and a plurality of catalysts may be used at the same time. Furthermore, an acidic catalyst or a thermal polymerization initiator may be used in combination. Examples of the acidic catalyst include an aqueous hydrochloric acid solution, formic acid, and acetic acid. Examples of the thermal polymerization initiator include a peroxide and an azo compound. Examples of the photopolymerization initiators include an alkylphenone compound, a sulfur-containing compound, an acylphosphine oxide compound, and an amine compound. Examples of the cross-linking catalyst for promoting the reaction of urethane bond formation include dibutyl tin dilaurate and dibutyl tin diethyl hexoate.

The photopolymerization initiator is preferably an alkylphenone compound in terms of curing properties. Specific examples of the alkylphenone compound include 1-hydroxy-cyclohexyl-phenyl-ketone, 2.2-dimethoxy-1.2-diphenylethan-1-one, 2-methyl-1-(4-methylthiophenyl)-2-morpholinopropan-1-one, 2-benzyl-2-dimethylamino-1-(4-phenyl)-1-butane, 2-(dimethylamino)-2-[(4-methylphenyl)methyl]-1-(4-phenyl)-1-butane, 2-benzyl-2-dimethylamino-1-(4-morpholinophenyl)-1-butane, 2-(dimethylamino)-2-[(4-methylphenyl)methyl]-1-[4-(4-morpholinyl)phenyl]-1-butane, 1-cyclohexyl-phenyl ketone, 2-methyl-1-phenylpropan-1-one, 1-[4-(2-ethoxy)-phenyl]-2-hydroxy-2-methyl-1-propan-1-one, bis(2-phenyl-2-oxoacetic acid)oxybisethylene, and high polymers of these materials.

A leveling agent, a lubricant, and an antistatic agent and the like may be added to the coating composition used for forming the resin film as long as the effects of the present invention are not impaired. As a result, the resin film can contain the leveling agent, the lubricant, and the antistatic agent and the like.

Examples of the leveling agent include acrylic copolymers, and silicone-based and fluorine-based leveling agents. Examples of the antistatic agent include metal salts such as a lithium salt, a sodium salt, a potassium salt, a rubidium salt, a cesium salt, a magnesium salt, and a calcium salt.

[Method for Producing Resin Film]

The method for producing a resin film of the present invention is not particularly limited, but it is preferably a method for producing a resin film, which includes performing steps 1, 2, 3, and 4 in this order.

Step 1: a step of applying a coating composition containing a resin precursor containing a segment represented by chemical formula 7 onto a support substrate to form a coating layer.

Step 2: a step of removing a solvent from the coating layer.

Step 3: a step of irradiating the resin precursor with active energy rays to cross-link the resin precursor.

Step 4: a step of peeling off the support substrate.

The steps 1 to 3 have already been described in the section of the method for producing the laminated body. The step 4 means a step of obtaining a resin film by peeling off the support substrate after the step 3 is completed to form the resin film. The method for peeling off the support substrate in the step 4 is not particularly limited as long as the support substrate and the resin film can be uniformly peeled off, but in general, a method for fixing a resin film side via an adhesive layer or the like, and peeling off a support substrate side is preferable.

It is more preferable that, when the resin film is produced, the above-mentioned condition 4 is also satisfied. That is, it is preferable that the coating layer from which the solvent has been removed satisfies the formula 4 after the step 2 and before the step 3.

$$\text{Formula 4: } T_4 > T_3$$

$T_3$: a minimum value of transmittance at not lower than 3250 $cm^{-1}$ but lower than 3350 $cm^{-1}$ in the FT-IR spectrum of the coating layer from which the solvent has been removed.

$T_4$: a minimum value of transmittance at not lower than 3350 $cm^{-1}$ but lower than 3450 $cm^{-1}$ in the FT-IR spectrum of the coating layer from which the solvent has been removed.

Furthermore, in the method for producing a resin film of the present invention, it is more preferable that the coating composition used in the step 1 contains a resin precursor containing a segment represented by chemical formula 8.

[Application Examples]

The resin film of the present invention can be suitably used for applications utilizing high flexibility and stretch properties.

Suitable examples thereof capable of being used include surface materials, internal materials, constituent materials, and materials for producing processes for plastic molded products such as frames and lenses for glasses and sunglasses, vanity cases, and food containers; showcases for water tanks and exhibitions; household electrical appliances such as housings of smartphones, touch panels, color filters, flat panel displays, flexible displays, flexible devices, wearable devices, sensors, circuit materials, electrical and electronic applications, keyboards, and remote controls for televisions and air-conditioners; vehicle components such as mirrors, windowpanes, buildings, dashboards, car navigation/touch panels, room mirrors, and windows; and medical films, sanitary material films, agricultural films, and building material films.

EXAMPLES

Next, the present invention will be described based on Examples, but the present invention is not necessarily limited thereto. Components and abbreviations used in Examples and Comparative Examples are as follows.

[Components and Abbreviations]

"Diisocyanate"

- IPDI: Isophorone diisocyanate
- MDI: 4,4'diphenylmethane diisocyanate
- HMDI: Hexamethylene diisocyanate
- H12MDI: Methylenebis(4,1-cyclohexylene) = diisocyanate

"Polyol"

- MPDAA: Poly-3-methylpentanediol adipate, Kuraray Polyol P-2010 manufactured by Kuraray Co., Ltd. (mass average molecular weight: 2000)
- PBAA-1: Polybutylene adipate, "Nippolane" (registered trademark) 3027 manufactured by Tosoh Corporation (mass average molecular weight: 2500)
- PBAA-2: Polybutylene adipate, "Nippolane" 4009 manufactured by Tosoh Corporation (mass average molecular weight: 1000)
- PBAA-3: Polybutylene adipate, "Nippolane" 4010 manufactured by Tosoh Corporation (mass average molecular weight: 2000)
- PTMG: Polytetramethylene glycol, PTMG2000 manufactured by Mitsubishi Chemical Corporation (mass average molecular weight: 2000)
- PEAA: Polyethylene glycol adipate, "Nippolane" 4040 manufactured by Tosoh Corporation (mass average molecular weight: 2000)

"Low molecular weight polyol"

- BD: Butanediol
- MPD: 3-Methyl-1,5-pentanediol

"Hydroxyacrylate"

- HEA: Hydroxyethyl acrylate
- HPA: Hydroxypropyl acrylate
- 4HBA: 4-hydroxybutylacryllate

[Synthesis of Resin Precursors and Resins]

[Resin Precursor A]

0.43 mol% of a diisocyanate (IPDI) and 0.29 mol% of a polyol (MPDAA) were diluted with toluene so that a solid content concentration was set to 60% by mass in a 4-port flask equipped with a thermometer, an agitator, a water-cooled condenser, and a nitrogen gas inlet, and reacted with each other at 90°C. When the amount of a residual isocyanate group reached 1.4% by mass as an initial addition amount, the temperature was lowered to 70°C. 0.29 mol of a hydroxyacrylate (HEA) was added for the reaction. When the amount of the residual isocyanate group reached 0.3% by mass as an initial addition amount, the reaction was terminated, and toluene was added thereto to adjust a solid content concentration to 60% by mass, thereby obtaining a toluene solution of a resin precursor A.

[Resin Precursors B to Q]

Toluene solutions of resin precursors B to Q were synthesized in the same manner as in the synthesis of the resin precursor A except that the combination of a diisocyanate, polyol, and hydroxyacrylate was changed to the combination described in Table 1.

[Resin A]

0.22 mol% of PTMG, 0.50 mol% of MDI, 0.25 mol% of BD, and 0.03 mol% of MPD were continuously supplied to a twinscrew extruder (L/D = 34; φ = 30 mm) all at once in a liquid state under heating by a metering pump, and polymerized at 260°C to obtain a resin A.

[Table 1]

| | | Raw materials | | | |
|---|---|---|---|---|---|
| Resin precursor | Resin | Diisocyanate | Polyol | Hydroxyacrylate | Low molecular weight polyol |
| A | - | IPDI | MPDAA | HEA | |
| B | - | IPDI | PBAA-1 | HEA | |
| C | - | IPDI | PBAA-2 | HEA | |
| D | - | IPDI | PBAA-3 | HEA | |
| E | - | IPDI | PBAA-1 | HPA | |
| F | - | IPDI | PBAA-1 | 4HBA | |
| G | - | IPDI | PTMG | 4HBA | |
| H | - | MDI | MPDAA | HEA | |
| I | - | MDI | PBAA-1 | HEA | |
| J | - | MDI | PTMG | HEA | |
| K | - | HMDI | MPDAA | HEA | |
| L | - | HMDI | PBAA-1 | HEA | |
| M | - | HMDI | PTMG | HEA | |
| N | - | H12MDI | MPDAA | HEA | |
| O | - | H12MDI | PBAA-1 | HEA | |

(continued)

| | | Raw materials | | | |
|---|---|---|---|---|---|
| Resin precursor | Resin | Diisocyanate | Polyol | Hydroxyacrylate | Low molecular weight polyol |
| P | - | H12MDI | PTMG | HEA | |
| Q | - | MDI | PEAA | HEA | |
| - | A | MDI | PTMG | - | BD,MPD |

[Preparation of Coating Composition]

[Coating composition 1]

The following materials were diluted with methyl ethyl ketone to obtain a coating composition 1 for forming a resin film having a solid content concentration of 40% by mass.

- Resin precursor A: toluene solution (solid content concentration: 60% by mass): 100 parts by mass
- Photopolymerization initiator "IRGACURE" (registered trademark) 184 (manufactured by BASF Japan Ltd.): 1.5 parts by mass.

[Preparation of Coating Compositions 2 to 17]

Coating compositions 2 to 17 were prepared in the same manner as in the preparation of the coating composition 1 except that a resin precursor A was changed to the combination of resin precursors described in Table 2.

[Preparation of Coating Composition 18]

While cooled toluene was stirred, a pellet-like resin A was added so that a solid content concentration was set to 20% by mass. After the transparent solution was confirmed, the temperature was raised to 70°C to completely dissolve the resin A, thereby obtaining a coating composition 18.

[Coating Composition for Release Layer]

The following materials were mixed, and diluted with a methyl ethyl ketone/isopropyl alcohol mixed solvent (mass mixing ratio: 50/50) to obtain a coating composition for a release layer having a solid content concentration of 5% by mass.

- Side chain type carbinol modified reaction type silicone oil
  (X-22-4015 manufactured by Shin-Etsu Chemical Co., Ltd., solid content concentration: 100% by mass): 5 parts by mass
- Both end type polyether modified reaction type silicone oil
  (X-22-4952 manufactured by Shin-Etsu Chemical Co., Ltd., solid content concentration: 100% by mass): 5 parts by mass
- Acrylic modified alkyd resin solution
  (Hariftal KV-905, manufactured by Harima Chemicals Co., Ltd., solid content concentration: 53% by mass): 100 parts by mass
- Isobutyl alcohol-modified melamine resin solution
  (Melan 2650L, manufactured by Hitachi Chemical Co., Ltd., solid content concentration: 60% by mass): 20 parts by mass
- Paratoluenesulfonic acid: 5 parts by mass

[Method for Producing Laminated Body and Resin Film]

[Formation of Support Substrate with Release Layer]

A coating device including a small-diameter gravure coater was used to apply a coating composition for a release layer to a polyester film having a thickness of 50 μm (trade name "Lumirror" (registered trademark) R75X

manufactured by Toray Co., Ltd.) while the number of lines of a gravure roll, the peripheral speed of the gravure roll, and the solid content concentration of the coating composition for a release layer were adjusted so that the thickness of the release layer was set to about 200 nm. Then, a hot air temperature was kept at 140°C for 30 seconds for drying and cross-linking to obtain a support substrate with a release layer.

[Method for Forming Laminated Body A]

(Step 1)

As a support substrate, the above-mentioned support substrate with a release layer was used, and a continuous coating device using a slot die coater was used. The above-mentioned coating composition was applied onto the release layer of the above-mentioned support substrate while the discharge flow rate of the coating composition was adjusted so that the thickness of the resin film after cross-linking was set to a specified film thickness, to form a coating layer.

(Step 2)

The coating layer formed in the step 1 was dried under the following conditions to remove a solvent. When the step 2 was completed, the coating layer (resin film before cross-linking) from which the solvent had been removed was subjected to FT-IR measurement. The method of the FT-IR measurement will be described later.

Temperature of Blown Air: Temperature: 80°C
Wind speed: coated surface side: 5 m/sec, the side opposite to coated surface side: 5 m/sec
Wind direction: coated surface side: parallel to the substrate surface, the side opposite to coated surface side: perpendicular to the substrate surface
Residence time: 2 minutes

(Step 3)

In the step 2, the coating layer (uncross-linked resin film) obtained by removing the solvent was crosslinked by irradiating the coating layer with active energy rays under the following conditions, to obtain a laminated body.

Irradiation light source: High-pressure mercury lamp
Irradiation output: 400 W/cm$^2$
Total light quantity: 120 mJ/cm$^2$
Oxygen concentration: 0.1 % by volume

[Method for Forming Laminated Body B]

(Step 1)

As a support substrate, the above-mentioned support substrate with a release layer was used, and a continuous coating device using a slot die coater was used. The above-mentioned coating composition was applied onto the release layer of the above-mentioned support substrate while the discharge flow rate of the coating composition was adjusted so that the thickness of the resin film was set to a specified film thickness, to form a coating layer.

(Step 2)

The coating layer formed in the step 1 was dried under the following conditions to remove a solvent. When the step 2 was completed, the coating layer from which the solvent had been removed was subjected to FT-IR measurement. The method of the FT-IR measurement will be described later.

Temperature of Blown Air: Temperature: 80°C
Wind speed: coated surface side: 5 m/sec, the side opposite to coated surface side: 5 m/sec
Wind direction: coated surface side: parallel to the substrate surface, the side opposite to coated surface side: perpendicular to the substrate surface
Residence time: 2 minutes

Laminated bodies and resin films of Examples 1 to 16 and Comparative Examples 1 and 2 were prepared by

the above method. The coating composition for forming a resin film, the method for forming a laminated body, and the thickness of the resin film corresponding to each of Examples and Comparative Examples were described in Table 2 below.

[Table 2]

| | Coating composition | | Structure of laminated body | | |
|---|---|---|---|---|---|
| | Resin precursor | Resin | Coating composition | Method for forming laminated body | Resin film thickness (μm) |
| Example 1 | A | - | 1 | A | 30 |
| Example 2 | B | - | 2 | A | 30 |
| Example 3 | C | - | 3 | A | 30 |
| Example 4 | D | - | 4 | A | 30 |
| Example 5 | E | - | 5 | A | 30 |
| Example 6 | F | - | 6 | A | 30 |
| Example 7 | G | - | 7 | A | 30 |
| Example 8 | H | - | 8 | A | 30 |
| Example 9 | I | - | 9 | A | 30 |
| Example 10 | J | - | 10 | A | 30 |
| Example 11 | K | - | 11 | A | 30 |
| Example 12 | L | - | 12 | A | 30 |
| Example 13 | M | - | 13 | A | 30 |
| Example 14 | N | - | 14 | A | 30 |
| Example 15 | O | - | 15 | A | 30 |
| Example 16 | P | - | 16 | A | 30 |
| Comparative Example 1 | Q | - | 17 | A | 30 |
| Comparative Example 2 | - | A | 18 | B | 30 |

[Evaluation of Resin Film and Laminated Body]

The laminated body and the resin film were subjected to the following performance evaluation, and the obtained results are shown in Tables 3, 4 and 5. Unless otherwise specified, the measurement was performed three times for one sample in each of Examples and Comparative Examples at different locations, and the average value thereof was used.

The resin film was regarded as equivalent to the laminated body, and subjected to the same evaluation.

[Peeling Force between Support Substrate and Resin Film]

In the laminated body, the resin film and the support substrate were slightly peeled off from the end part in advance to form a gripping margin for measurement with a tensile tester. Next, a resistance value (N) when the gripping margin was peeled off by 180 degrees at a speed of 300 (mm/min) was measured using a tensile tester under an environment of 23°C and 65% RH. The resistance value (N) was divided by the width (mm) of each of the support substrate and resin layer, then multiplied by 50, and converted into a peeling force (mN/50 mm) corresponding to each of the widths of 50 mm. For the laminated body in which the support substrates were present on both sides of the resin film, the measurement was performed for each of the support substrates.

[Measurement of Infrared Absorption Spectrum of Resin Film (or Coating Layer after Removing Solvent) by FT-IR]

The surface of the resin film was subjected to FT-IR spectrum measurement by the ATR method. A measuring device and measuring conditions are as follows.

Measuring device:

manufactured by Varian Company FT-IR Varian-670

Measurement conditions:

| | |
|---|---|
| Light source | Special ceramics |
| Detector | DTGS |
| Resolution | $4cm^{-1}$ |
| Cumulated number | 128 times |
| Measurement wave number range | 4,000 to 680 $cm^{-1}$ |

From the obtained spectrum, a minimum value ($T_1$) of transmittance at not lower than 3250 $cm^{-1}$ but lower than 3350 $cm^{-1}$ and a minimum value ($T_2$) of transmittance at not lower than 3350 $cm^{-1}$ but lower than 3450 $cm^{-1}$ were obtained.

The coating layer after the solvent was removed was also measured in the same manner, and from the obtained spectrum, a minimum value ($T_3$) of transmittance at not lower than 3250 $cm^{-1}$ but lower than 3350 $cm^{-1}$ and a minimum value ($T_4$) of transmittance at not lower than 3350 $cm^{-1}$ but lower than 3450 $cm^{-1}$ were obtained.

[Small-Angle X-Ray Scattering]

The resin film was subjected to small-angle X-ray scattering measurement. In the present invention, the small-angle X-ray scattering was measured using a rotating anode X-ray generator having a copper anode as an X-ray source. Only a Cu-K$\alpha$ ray was extracted by an X-ray monochromator using a graphite crystal, and used as an incident X-ray.

Upon incidence of the X-ray onto the measurement sample, the shape of the X-ray beam is diaphragmed through two X-ray slits each having a circular opening having a diameter of 1 mm, and being placed at a distance of 50 cm or more apart from each other.

The X-ray intensity scattered from the sample is measured at a scattering angle of 0 degree to 3.5 degrees using an X-ray proportional counter placed at a distance of 1.5 m from the sample position, to obtain data of scattering intensity distribution. A product of a scattering intensity measured under a sample-omitting condition (blank) (usually called "air scattering intensity") and an X-ray transmittance is subtracted from the obtained data of scattering intensity distribution, to obtain a difference therebetween. Here, the X-ray transmittance means a percentage of an intensity of X-ray non-scattered and penetrated through the sample, to that of the incident X-ray.

A corrected scattering intensity (I(q)) is obtained by subtracting a background intensity due to thermal diffuse scattering from the above calculated difference. The background intensity due to thermal diffuse scattering was determined by subjecting the scattering intensity of X-ray present on a wider angle side than a scattering angle providing a minimum scattering intensity at a scattering angle of 2 degrees or more, to curve-fitting according to the following formula:

$$\text{(Background strength)} = aq^2 + b$$

a, b: Variables optimized by curve-fitting
q: Wave number vector q = 2 sin$\theta$/1.542
2$\theta$: Scattering angle.

[Evaluation of Flexibility of Resin Film]

A laminated body was cut into a rectangle having a width of 10 mm and a length of 150 mm, and the resin film was then peeled off from the support substrate to prepare a test piece. The direction of the length of 150 mm was aligned with the longitudinal direction of the resin film. Using a tensile tester (Tensilon UCT-100 manufactured by Orientec Co., Ltd.), an initial tensile chuck distance was set to 50 mm. A tensile speed was set to 300 mm/min. A tensile test was performed at a measurement temperature of 23°C.

A load b (N) on a sample at a chuck distance of a (mm) was read, and a strain amount x (%) and a stress y

($N/mm^2$) were calculated from the following formulae. In the formulae, k (mm) is a sample thickness before the test.

$$\text{Strain amount: } x = ((a - 50)/50) \times 100$$

$$\text{Stress : } y = b / (k \times 10)$$

Of the data obtained above, the stress at a strain amount of 5% was taken as a 5% strain stress, and the stress of 5 MPa or less was regarded as acceptable.

[Evaluation of Restoration Properties of Resin Film]

The resin film was cut into a rectangle having a width of 10 mm and a length of 150 mm, and used as a test piece. The direction of the length of 150 mm was aligned with the longitudinal direction of the resin film. Using a tensile tester (Tensilon UCT-100 manufactured by Orientec Co., Ltd.), the test piece was evaluated under two conditions having different deformation speeds and strain amounts in order to determine the superiority and inferiority of restoration properties at a measurement temperature of 23°C.

Condition A: The sample was stretched to a strain amount of 20% under conditions of an initial chuck distance of 50 mm and a tensile speed of 50 mm/min, and a tensile load on the sample was then released. A distance marked as an initial test length before measurement was measured, and taken as L mm. An elastic restoration rate $z_1$ (%) and a shear rate $s_1$ ($s^{-1}$) were calculated from the following formulae.

$$\text{Elastic restoration rate } z_1 = (1 - (L - 50)/10) \times 100 \ (\%).$$

$$\text{Shear velocity } s_1 = (50/60)/10 = 0.08 \ (s^{-1})$$

Condition B: The sample was stretched to a strain amount of 100% under conditions of an initial chuck distance of 20 mm and a tensile speed of 300 mm/min, and a tensile load on the sample was then released. A distance marked as an initial test length before measurement was measured, and taken as L mm. An elastic restoration rate $z_2$ (%) was calculated from the following formulae.

$$\text{Elastic restoration rate } z_2 = (1 - (L - 20)/20) \times 100 \ (\%).$$

$$\text{Shear velocity } s_1 = (300/60)/20 = 0.25 \ (s^{-1})$$

In the above evaluation, condition A of 90% or more and condition B of 70% or more were regarded as acceptable.

[Measurement of Size Change Rate of Resin Film]

The laminated body was cut into a rectangle having a width of 10 mm, and the support substrate was peeled off from the resin film to prepare a test piece.

Based on the tensile vibration-non-resonant method of JIS K7244 (1998) (this is referred to as the dynamic viscoelasticity method), the storage elastic modulus and loss elastic modulus of the resin film were obtained using the dynamic viscoelasticity measuring device "DMS6100" manufactured by Seiko Instruments Co., Ltd.

Measurement mode: Tensile
Chuck distance: 20 mm
Test piece width: 10 mm
Frequency: 1 Hz

Strain amplitude: 10 μm
Minimum tension: 20 mN
Initial force amplitude value: 40 mN
Measurement temperature: -100°C to 200°C
Temperature rising rate: 5°C/min

At this time, a dL value (output value of Linear Variable Differential Transformer (LVDT)) is obtained at the same time as the measurement of the storage elastic modulus and loss elastic modulus. This represents a value corresponding to the size of the test piece during measurement. The size change rate was calculated by the following formula, where the dL value at 30°C was a30 (μm) and the dL value at 150°C was a150 (μm).

$$(\text{Size change rate}) = ((a150 - a30)/20{,}000) \times 100.$$

Furthermore, the absolute value of the size change rate at 150°C based on the size at 30°C obtained by the above formula was calculated, and the size change rate of 2.5% or less was regarded as acceptable.

Table 3 summarizes the inclusion/non-inclusion of the segments of chemical formulae 1 to 7 of the resin film. Table 4 summarizes the evaluation results of the above conditions 1 to 4 and the peeling force between the support substrate and the resin film. Table 5 summarizes the evaluation results of flexibility, restoration properties, and heat resistance of the resin film.

[Table 3]

| | Chemical formula 1 | Chemical formula 2 | Chemical formula 3 | Chemical formula 4 | Chemical formula 5 | Chemical formula 6 | Chemical formula 7 | Chemical formula 8 |
|---|---|---|---|---|---|---|---|---|
| Example 1 | Inclusion | Inclusion | Inclusion | Inclusion | Non-inclusion | Non-inclusion | Inclusion | Inclusion |
| Example 2 | Inclusion | Inclusion | Inclusion | Inclusion | Non-inclusion | Inclusion | Inclusion | Inclusion |
| Example 3 | Inclusion | Inclusion | Inclusion | Inclusion | Non-inclusion | Inclusion | Inclusion | Inclusion |
| Example 4 | Inclusion | Inclusion | Inclusion | Inclusion | Non-inclusion | Inclusion | Inclusion | Inclusion |
| Example 5 | Inclusion | Inclusion | Inclusion | Inclusion | Non-inclusion | Inclusion | Inclusion | Inclusion |
| Example 6 | Inclusion | Inclusion | Inclusion | Inclusion | Non-inclusion | Inclusion | Inclusion | Inclusion |
| Example 7 | Inclusion | Inclusion | Inclusion | Inclusion | Inclusion | Non-inclusion | Inclusion | Inclusion |
| Example 8 | Inclusion | Inclusion | Inclusion | Non-inclusion | Non-inclusion | Non-inclusion | Inclusion | Inclusion |
| Example 9 | Inclusion | Inclusion | Inclusion | Non-inclusion | Non-inclusion | Inclusion | Inclusion | Inclusion |
| Example 10 | Inclusion | Inclusion | Inclusion | Non-inclusion | Inclusion | Non-inclusion | Inclusion | Inclusion |
| Example 11 | Inclusion | Inclusion | Inclusion | Non-inclusion | Non-inclusion | Non-inclusion | Inclusion | Inclusion |
| Example 12 | Inclusion | Inclusion | Inclusion | Non-inclusion | Non-inclusion | Inclusion | Inclusion | Inclusion |
| Example 13 | Inclusion | Inclusion | Inclusion | Non-inclusion | Inclusion | Non-inclusion | Inclusion | Inclusion |
| Example 14 | Inclusion | Inclusion | Inclusion | Non-inclusion | Non-inclusion | Non-inclusion | Inclusion | Inclusion |
| Example 15 | Inclusion | Inclusion | Inclusion | Non-inclusion | Non-inclusion | Inclusion | Inclusion | Inclusion |
| Example 16 | Inclusion | Inclusion | Inclusion | Non-inclusion | Inclusion | Non-inclusion | Inclusion | Inclusion |
| Comparative Example 1 | Inclusion | Inclusion | Inclusion | Non-inclusion | Non-inclusion | Non-inclusion | Inclusion | Inclusion |
| Comparative Example 2 | Non-inclusion | Inclusion | Inclusion | Non-inclusion | Inclusion | Non-inclusion | Non-inclusion | Non-inclusion |

[Table 4]

| | Condition 1 | Condition 2 | Condition 3 | Condition 4 | Peeling force |
|---|---|---|---|---|---|
| | Formula 1 | Formula 2 | Formula 3 | Formula 4 | |
| | Satisfy/not satisfy | A | \|D2-D3\| | Satisfy/not satisfy | N/50mm |
| Example 1 | Satisfy | -2 | 2.2 | Satisfy | 0.1 |
| Example 2 | Satisfy | -3.5 | 0.3 | Satisfy | 0.15 |
| Example 3 | Satisfy | -3.5 | 0.3 | Satisfy | 0.08 |
| Example 4 | Satisfy | -3.5 | 0.3 | Satisfy | 0.1 |
| Example 5 | Satisfy | -3.5 | 0.3 | Satisfy | 0.15 |
| Example 6 | Satisfy | -3.5 | 0.3 | Satisfy | 0.15 |
| Example 7 | Satisfy | -3.5 | 1.5 | Satisfy | 0.15 |
| Example 8 | Satisfy | -2 | 0.9 | Satisfy | 0.08 |
| Example 9 | Satisfy | -2 | 1.7 | Satisfy | 0.08 |
| Example 10 | Satisfy | -2 | 4.6 | Satisfy | 0.08 |
| Example 11 | Satisfy | -3.5 | 0.9 | Satisfy | 0.1 |
| Example 12 | Satisfy | -3.5 | 1 | Satisfy | 0.1 |
| Example 13 | Satisfy | -2 | 2.8 | Satisfy | 0.1 |
| Example 14 | Satisfy | -2.5 | 1.7 | Satisfy | 0.1 |
| Example 15 | Satisfy | -3.5 | 0.2 | Satisfy | 0.1 |
| Example 16 | Satisfy | -2 | 2 | Satisfy | 0.1 |
| Comparative Example 1 | Not satisfy | -1.8 | 1.7 | Not satisfy | 0.08 |
| Comparative Example 2 | Not satisfy | -1.5 | 4.6 | Satisfy | 0.05 |

[Table 5]

| | Flexibility | Restoration Properties | | Heat resistance |
|---|---|---|---|---|
| | 5% strain stress (MPa) | Restoration rate Condition A (%) | Restoration rate Condition B (%) | Size change rate at 150°C (% ) |
| Example 1 | 2.5 | 90 | 70 | 1.0 |
| Example 2 | 1.0 | 95 | 85 | 2.5 |
| Example 3 | 5.0 | 95 | 85 | 0.8 |
| Example 4 | 2.0 | 95 | 85 | 1.2 |
| Example 5 | 1.0 | 97 | 90 | 1.0 |
| Example 6 | 1.0 | 97 | 95 | 0.8 |
| Example 7 | 1.0 | 95 | 85 | 0.8 |
| Example 8 | 5.0 | 95 | 85 | 0.8 |
| Example 9 | 4.0 | 92 | 80 | 0.8 |
| Example 10 | 4.0 | 90 | 70 | 0.8 |
| Example 11 | 2.5 | 95 | 85 | 1.2 |
| Example 12 | 2.0 | 92 | 80 | 1.2 |

(continued)

| | Flexibility | Restoration Properties | | Heat resistance |
|---|---|---|---|---|
| | 5% strain stress (MPa) | Restoration rate Condition A (%) | Restoration rate Condition B (%) | Size change rate at 150°C (% ) |
| Example 13 | 2.0 | 90 | 70 | 1.2 |
| Example 14 | 2.5 | 92 | 80 | 1.2 |
| Example 15 | 2.0 | 97 | 95 | 1.2 |
| Example 16 | 2.0 | 92 | 80 | 1.2 |
| Comparative Example 1 | 10 | 85 | 60 | 0.8 |
| Comparative Example 2 | 4 | 80 | 50 | 15.0 |

In Table 3, the meaning of "inclusion" in the column of chemical formula 1 means that each of Examples and the like includes the segment of chemical formula 1. The meaning of "non-inclusion" means that each of Examples and the like does not include the segment of chemical formula 1. Chemical formulae 2 to 6 are also the same as chemical formula 1. The meaning of "inclusion" in the column of chemical formula 7 means that each of Examples and the like is a cured product obtained by cross-linking a resin precursor containing a segment of chemical formula 7. The meaning of "non-inclusion" means that each of Examples and the like is not a cured product obtained by cross-linking a resin precursor containing a segment of chemical formula 7. Chemical formula 8 is also the same as chemical formula 7.

DESCRIPTION OF REFERENCE SIGNS

1, 4, 8, 12, 17, 21, 26, 32: Laminated body
2, 5, 9, 13, 18, 22, 27, 33: Resin film
6, 10, 14, 15, 23, 28, 30, 34: Release layer
3, 7, 11, 16, 19, 24, 29, 35: Support substrate
20, 25, 31, 37: Protective material
36: Adhesive layer

INDUSTRIAL APPLICABILITY

The resin film of the present invention can be suitably used for applications utilizing high flexibility and stretch properties.

Suitable examples thereof capable of being used include surface materials, internal materials, constituent materials, and materials for producing processes for plastic molded products such as frames and lenses for glasses and sunglasses, vanity cases, and food containers; showcases for water tanks and exhibitions; household electrical appliances such as housings of smartphones, touch panels, color filters, flat panel displays, flexible displays, flexible devices, wearable devices, sensors, circuit materials, electrical and electronic applications, keyboards, and remote controls for televisions and air-conditioners; vehicle components such as mirrors, windowpanes, buildings, dashboards, car navigation/touch panels, room mirrors, and windows; and medical films, sanitary material films, agricultural films, and building material films.

**Claims**

1. A resin film comprising a segment represented by chemical formula 1 and a segment represented by chemical formula 2, and satisfying condition 1:
condition 1: in an FT-IR spectrum of the resin film, a minimum value ($T_1$) of transmittance at not lower than 3250 $cm^{-1}$ but lower than 3350 $cm^{-1}$ and a minimum value ($T_2$) of transmittance at not lower than 3350 $cm^{-1}$ but lower than 3450 $cm^{-1}$ satisfy formula 1:

$$\text{Formula 1: } T_2 < T_1$$

[Chemical Formula 1]

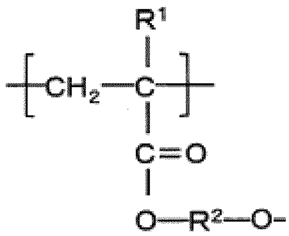

··· Chemical Formula 1

[Chemical Formula 2]

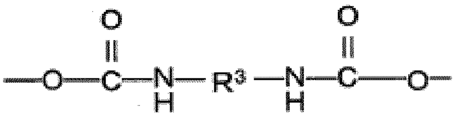

··· Chemical Formula 2

$R^1$ refers to hydrogen or a methyl group;
$R^2$ refers to one of the following:

a substituted or unsubstituted alkylene group;
a substituted or unsubstituted arylene group;
an alkylene group having an ether group, an ester group, or an amide group therein;
an arylene group having an ether group, an ester group, or an amide group therein;
an unsubstituted alkylene group having an ether group, an ester group, or an amide group therein; and
an unsubstituted arylene group having an ether group, an ester group, or an amide group therein;

$R^3$ refers to any of the following:

a substituted or unsubstituted alkylene group; and
a substituted or unsubstituted arylene group.

**2.** The resin film according to claim 1, wherein the resin film satisfies condition 2 in small-angle X-ray scattering by vertically incident X-rays:
condition 2: a slope A when a logarithm of scattering intensity (I(q)) is plotted on a Y-axis and a logarithm of a wave number vector (q) is plotted on an X-axis satisfies formula 2 when q is 0.01 $nm^{-1}$ or more and 0.02 $nm^{-1}$ or less.

$$\text{Formula 2: } -5.0 \leq A \leq -3.0$$

**3.** The resin film according to claim 1 or 2, wherein the resin film includes a segment represented by chemical formula 3, and satisfies condition 3:
condition 3: a vector length of a Hansen solubility parameter of the segment represented by chemical formula 2 (hereinafter taken as $D_2$) and a vector length of a Hansen solubility parameter of the segment represented by chemical formula 3 (hereinafter taken as $D_3$) satisfy formula 3:

$$\text{Formula 3: } |D_2 - D_3| \leq 2 \ ((MPa)^{0.5})$$

[Chemical Formula 3]

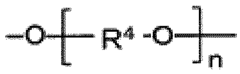

··· Chemical Formula 3

$R^4$ refers to any of the following, and n is an integer of 3 or more:

a substituted or unsubstituted alkylene group;
a substituted or unsubstituted arylene group;
an alkylene group having an ether group or an ester group therein;
an arylene group having an ether group or an ester group therein;
an unsubstituted alkylene group having an ether group or an ester group therein; and
an unsubstituted arylene group having an ether group or an ester group therein.

**4.** The resin film according to any one of claims 1 to 3, wherein the resin film includes a segment represented by chemical formula 4 and further includes any one of a segment represented by chemical formula 5 and a segment represented by chemical formula 6:

[Chemical Formula 4]

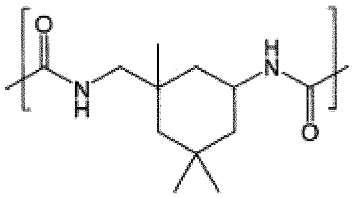

··· Chemical Formula 4

[Chemical Formula 5]

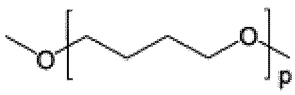

··· Chemical Formula 5

[Chemical Formula 6]

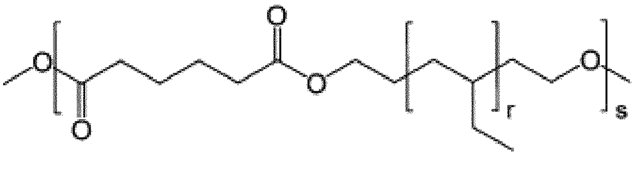

··· Chemical Formula 6

p is an integer of 1 or more;
r is an integer of 1 or more; and
s is an integer of 1 or more.

**5.** The resin film according to any one of claims 1 to 4, wherein the resin film is a cured product obtained by cross-linking a resin precursor containing a segment represented by chemical formula 7:

[Chemical Formula 7]

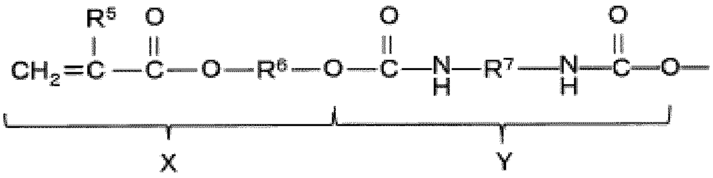

... Chemical Formula 7

$R^5$ refers to hydrogen or a methyl group;
$R^6$ refers to any of the following:

a substituted or unsubstituted alkylene group;
a substituted or unsubstituted arylene group;
an alkylene group having an ether group, an ester group, or an amide group therein;
an arylene group having an ether group, an ester group, or an amide group therein;
an unsubstituted alkylene group having an ether group, an ester group, or an amide group therein; and
an unsubstituted arylene group having an ether group, an ester group, or an amide group therein;

$R^7$ refers to any of the following:

a substituted or unsubstituted alkylene group; and
a substituted or unsubstituted arylene group.

**6.** The resin film according to any one of claims 1 to 5, wherein the resin film is a cured product obtained by cross-linking a resin precursor containing a segment represented by chemical formula 8:

[Chemical Formula 8]

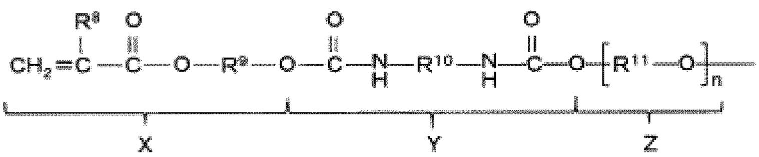

... Chemical Formula 8

$R^8$ refers to hydrogen or a methyl group;
$R^9$ and $R^{11}$ refer to any of the following, and n is an integer of 3 or more:

a substituted or unsubstituted alkylene group;
a substituted or unsubstituted arylene group;
an alkylene group having an ether group, an ester group, or an amide group therein;
an arylene group having an ether group, an ester group, or an amide group therein;
an unsubstituted alkylene group having an ether group, an ester group, or an amide group therein; and
an unsubstituted arylene group having an ether group, an ester group, or an amide group therein;

$R^{10}$ refers to any of the following:

a substituted or unsubstituted alkylene group; and
a substituted or unsubstituted arylene group.

**7.** A laminated body comprising a support substrate on at least one surface of the resin film according to any one of

claims 1 to 6, wherein
a peeling force between the support substrate and the resin film is 1 N/50 mm or less.

**8.** A method for producing a laminated body according to claim 7, wherein steps 1, 2 and 3 are performed in this order, and condition 4 is satisfied:

step 1: a step of applying a coating composition containing a resin precursor containing a segment represented by chemical formula 7 onto a support substrate to form a coating layer;
step 2: a step of removing a solvent from the coating layer; and
step 3: a step of irradiating the resin precursor with active energy rays to cross-link the resin precursor;

condition 4: after step 2 and before step 3, the coating layer from which the solvent has been removed satisfies formula 4:

$$\text{Formula 4: } T_4 > T_3$$

$T_3$: a minimum value of transmittance at not lower than 3250 $cm^{-1}$ but lower than 3350 $cm^{-1}$ in the FT-IR spectrum of the coating layer from which the solvent has been removed;
$T_4$: a minimum value of transmittance at not lower than 3350 $cm^{-1}$ but lower than 3450 $cm^{-1}$ in the FT-IR spectrum of the coating layer from which the solvent has been removed:

[Chemical Formula 7]

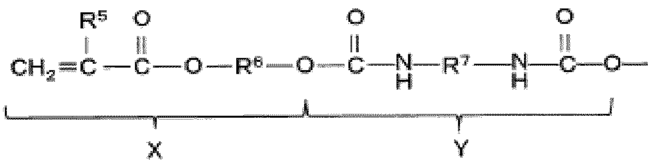

··· Chemical Formula 7

$R^5$ refers to hydrogen or a methyl group;
$R^6$ refers to any of the following:

a substituted or unsubstituted alkylene group;
a substituted or unsubstituted arylene group;
an alkylene group having an ether group, an ester group, or an amide group therein;
an arylene group having an ether group, an ester group, or an amide group therein;
an unsubstituted alkylene group having an ether group, an ester group, or an amide group therein; and
an unsubstituted arylene group having an ether group, an ester group, or an amide group therein;

$R^7$ refers to any of the following:

a substituted or unsubstituted alkylene group; and
a substituted or unsubstituted arylene group.

**9.** The method for producing a laminated body according to claim 8, wherein the resin precursor contains a segment of chemical formula 8:

[Chemical Formula 8]

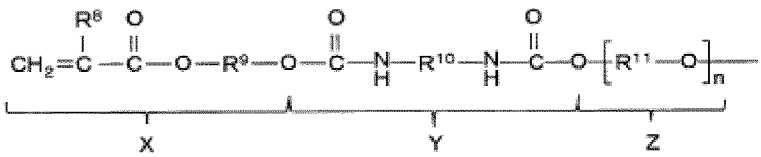

·· Chemical Formula 8

$R^8$ refers to hydrogen or a methyl group;
$R^9$ and $R^{11}$ refer to any of the following, and n is an integer of 3 or more:

a substituted or unsubstituted alkylene group;
a substituted or unsubstituted arylene group;
an alkylene group having an ether group, an ester group, or an amide group therein;
an arylene group having an ether group, an ester group, or an amide group therein;
an unsubstituted alkylene group having an ether group, an ester group, or an amide group therein; and
an unsubstituted arylene group having an ether group, an ester group, or an amide group therein;

$R^{10}$ refers to any of the following:

a substituted or unsubstituted alkylene group; and
a substituted or unsubstituted arylene group.

**10.** A method for producing a resin film according to any one of claims 1 to 6, wherein steps 1, 2, 3, and 4 are performed in this order:

step 1: a step of applying a coating composition containing a resin precursor containing a segment of chemical formula 7 onto a support substrate to form a coating layer;
step 2: a step of removing a solvent from the coating layer;
step 3: a step of irradiating the resin precursor with active energy rays to cross-link the resin precursor; and
step 4: a step of peeling off the support substrate; [Chemical Formula 7]

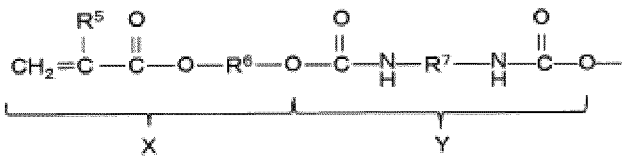

··· Chemical Formula 7

$R^5$ refers to hydrogen or a methyl group;
$R^6$ refers to any of the following:

a substituted or unsubstituted alkylene group;
a substituted or unsubstituted arylene group;
an alkylene group having an ether group, an ester group, or an amide group therein;
an arylene group having an ether group, an ester group, or an amide group therein;
an unsubstituted alkylene group having an ether group, an ester group, or an amide group therein; and
an unsubstituted arylene group having an ether group, an ester group, or an amide group therein;

$R^7$ refers to any of the following:

a substituted or unsubstituted alkylene group; and
a substituted or unsubstituted arylene group.

**11.** The method for producing a laminated body according to claim 10, wherein the resin precursor contains a segment represented by chemical formula 8:

[Chemical Formula 8]

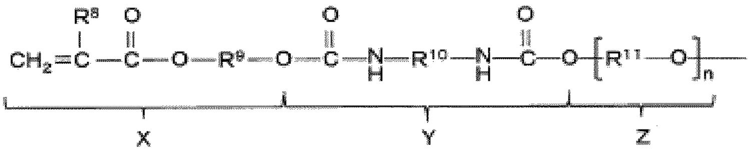

··· Chemical Formula 8

$R^8$ refers to hydrogen or a methyl group;
$R^9$ and $R^{11}$ refer to any of the following, and n is an integer of 3 or more:

a substituted or unsubstituted alkylene group;
a substituted or unsubstituted arylene group;
an alkylene group having an ether group, an ester group, or an amide group therein;
an arylene group having an ether group, an ester group, or an amide group therein;
an unsubstituted alkylene group having an ether group, an ester group, or an amide group therein; and
an unsubstituted arylene group having an ether group, an ester group, or an amide group therein;

$R^{10}$ refers to any of the following:

a substituted or unsubstituted alkylene group; and
a substituted or unsubstituted arylene group.

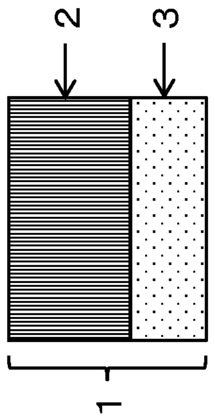


Figure 1

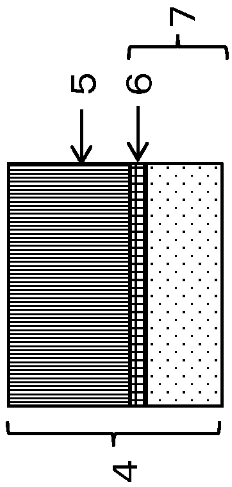


Figure 2

Figure 3

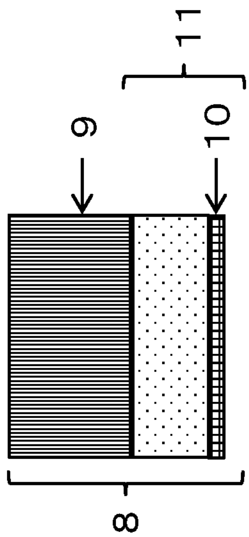

Figure 4

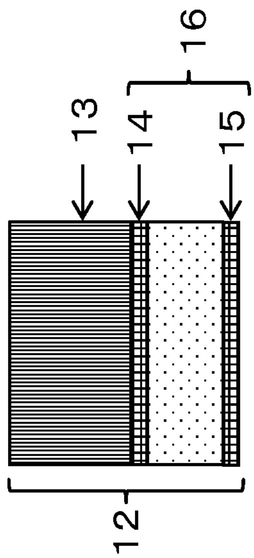

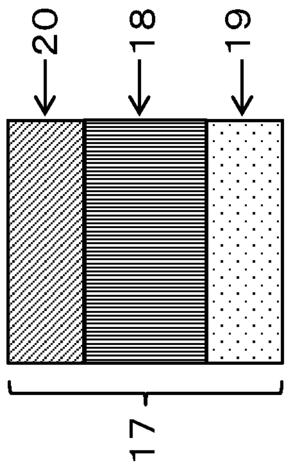


Figure 5

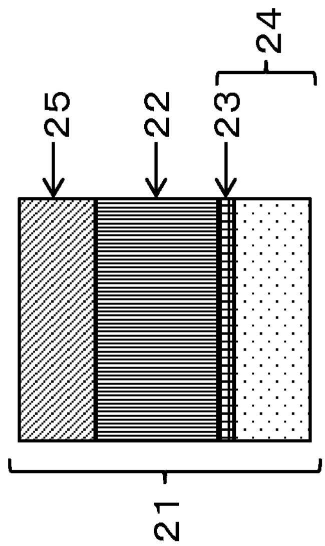


Figure 6

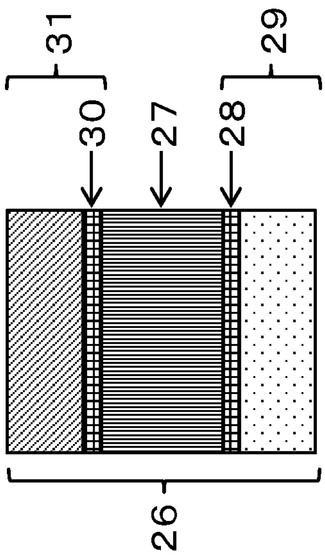


Figure 7

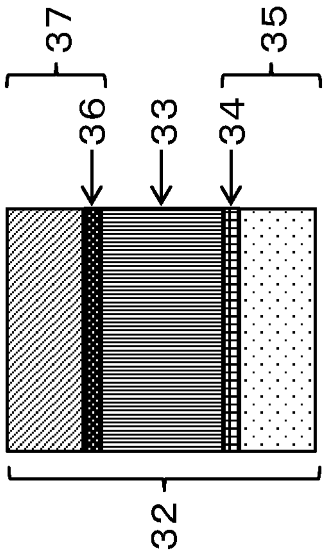


Figure 8

**INTERNATIONAL SEARCH REPORT**

International application No. PCT/JP2019/030480

A. CLASSIFICATION OF SUBJECT MATTER
Int.Cl. C08J5/18(2006.01)i, B32B27/30(2006.01)i, B32B27/34(2006.01)i, C08F299/06(2006.01)i

According to International Patent Classification (IPC) or to both national classification and IPC

B. FIELDS SEARCHED

Minimum documentation searched (classification system followed by classification symbols)
Int.Cl. C08J5/00-5/02, C08J5/12-5/22, C08J7/04-7/06, B32B1/00-43/00, C08F283/01, C08F290/00-290/14, C08F299/00-299/08, C0818/00-18/87, C08G71/00-71/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2014-198852 A (NIPPON KAYAKU CO., LTD.) 23 October 2014, claims, paragraphs [0028]-[0031], [0033], [0045], [0050]-[0060], in particular, example 2 (Family: none) | 1-11<br>7-11 |
| Y | WO 2008/001855 A1 (MITSUBISHI PLASTICS, INC.) 03 January 2008, paragraphs [0030]-[0036], [0055]-[0056], [0068]-[0080], in particular, comparative example 4 & TW 200810922 A | 1,2,4-5,7-8,10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 October 2019 (18.10.2019) | 29 October 2019 (29.10.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2019/030480

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2013-184988 A (DKS CO., LTD.) 19 September 2013, claims, paragraphs [0008], [0029]-[0033], in particular, example 2 & KR 10-2013-0102021 A & CN 103304767 A & TW 201406804 A | 1,5,6<br>7-11 |
| A | JP 2015-124265 A (THE NIPPON SYNTHETIC CHEMICAL INDUSTRY CO., LTD.) 06 July 2015, claims, paragraphs [0001], [0007] (Family: none) | 1-11 |
| A | JP 2012-526894 A (3M INNOVATIVE PROPERTIES CO.) 01 November 2012, claims, paragraph [0044] & US 2012/0100326 A1, claims, paragraph [0044] & WO 2010/132176 A2 & EP 2430108 A2 & CN 102459490 A & KR 10-2012-0024765 A | 1-11 |
| A | JP 06-049154 A (E. I. DU PONT DE NEMOURS AND COMPANY) 22 February 1994, claims & EP 525578 A1, claims & AU 2070592 A & CA 2075115 A | 1-11 |
| E,A | JP 2019-151815 A (TORAY INDUSTRIES, INC.) 12 September 2019, claims, examples (Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015189886 A
- JP 2010222568 A
- US 2681294 A

### Non-patent literature cited in the description

- **MUTSUHISA FURUKAWA.** What Brings Mechanical Properties of Themoplastic Polyurethane Elastomers. *Journal of The Society of Rubber Industry,* 2010, vol. 83 (9